# FASCICULE DE BREVET EUROPEEN

(11) **EP 1 066 150 B1**
(45) Date de publication et mention de la délivrance du brevet: **08.01.2003**
(21) Numéro de dépôt: 98913860.7
(22) Date de dépôt: 06.03.1998
(51) Int. Cl.: B29C 51/04

(54) **PROCEDE ET DISPOSITIF DE THERMO-FORMAGE, EN PARTICULIER POUR LA FABRICATION D'UN RECIPIENT**
VERFAHREN UND VORRICHTUNG ZUM THERMOFORMEN, INSBESONDERE ZUR HERSTELLUNG EINES BEHÄLTERS
THERMOFORMING METHOD AND DEVICE, IN PARTICULAR FOR MAKING A CONTAINER

(43) Date de publication de la demande: 10.01.2001
(73) Titulaire: Theno, Jacques, 28150 Reclainville (FR)
(72) Inventeur: Theno, Jacques, 28150 Reclainville (FR)
(74) Mandataire: Pontet, Bernard
(86) Numéro de dépôt international: FR9800460
(87) Numéro de publication internationale: WO99044808

(56) Documents cités:
- EP-A- 0 079 682
- EP-A- 0 457 664
- DE-A- 2 428 578
- GB-A- 861 355
- PATENT ABSTRACTS OF JAPAN vol. 004, no. 116 (M-027), 19 août 1980 & JP 55 073515 A (SUMITOMO BAKELITE CO LTD), 3 juin 1980

## Description

La présente invention concerne de façon générale le domaine du thermoformage, plus particulièrement de la fabrication automatique des récipients en matière plastique pour le conditionnement notamment des matières alimentaires, et plus particulièrement un nouveau procédé de réalisation d'objets tels que récipients thermoformés ainsi qu'un dispositif et un appareil de mise en oeuvre d'un tel procédé.

On connaît déjà un procédé de fabrication industrielle de tels récipients par thermoformage qui consiste principalement, en partant d'un film plastique préalablement chauffé et introduit entre un moule et un contre-moule, à emboutir ce film avec un poinçon puis, par soufflage d'air ou aspiration, à former le récipient dans sa forme finale. Ce type de procédé utilise aujourd'hui principalement deux modèles de poinçons d'emboutissage présentant chacun leurs inconvénients :

Poinçon massif : l'étirage et la répartition du plastique sont incontrôlables compte-tenu du glissement de celui-ci sur le poinçon.

Poinçon à lames en ailettes : de fabrication complexe et fragiles, ils marquent des impacts et fragilisent les zones localisées autour de ceux-ci. Les récipients peuvent ainsi présenter certains défauts d'étanchéité.

Selon le EP-A-00 79 682 et le préambule des revendications 1 et 18, le travail du poinçon est assisté par un fond mobile du moule. En service, le film est pincé entre le poinçon et le fond mobile, qui se déplacent ensuite conjointement vers le fond de la cavité de moulage.

La présente invention vise à proposer un nouveau procédé et dispositif de thermoformage pour la réalisation d'objets tels que récipients en matière plastique, maîtrisant parfaitement la répartition de la matière sur l'ensemble du récipient sans fragiliser certaines zones par l'impact du poinçon d'emboutissage, permettant ainsi l'économie de matière première.

Suivant un premier aspect de l'invention, le procédé de thermoformage comprenant les étapes de :
- tenue du film de matière plastique chauffé le long du pourtour d'une cavité de moulage;
- pincement du film entre un poinçon et un fond de moule mobile;
- déplacement conjoint du poinçon et du fond de moule vers l'intérieur de la cavité de moulage;
- soufflage de l'ébauche contre des parois intérieures refroidies de la cavité de moulage,
est caractérisé en ce que le poinçon et le fond de moule pincent le film le long d'au moins une zone de pincement localisée dont la géométrie est choisie pour définir, en plus de la zone de pincement, deux zones d'étirage qui sont étirées de manière sensiblement indépendante l'une de l'autre.

Ainsi, selon l'invention, on définit des zones d'étirage différent et on évite les transferts de matière indésirée d'une zone à l'autre, en particulier pendant l'étape de déplacement conjoint du poinçon et du fond de moule.

En outre, chaque zone d'étirage ayant des dimensions dont certaines au moins sont plus petites que les dimensions de l'étendue totale de film soumise au thermoformage, la répartition de matière est plus homogène dans chaque zone.

L'invention permet également de donner à chaque zone des épaisseurs différentes en les soumettant à des étirages de pourcentages différents.

En particulier, pour des récipients, il est préféré que le fond soit plus robuste que la paroi latérale. L'invention permet cela.

Il est particulièrement avantageux que la zone de pincement ait une forme générale annulaire, les zones d'étirage étant situées à l'intérieur et respectivement à l'extérieur de la zone annulaire. La zone annulaire peut être constituée par une bande continue ou par des segments disjoints.

Selon une particularité avantageuse de l'invention, dans une première des zones d'étirage, on produit une partie au moins de l'étirage par un piston qui déplace une partie de la première zone d'étirage par rapport à la zone de pincement localisée.

Le piston constitue un moyen de différencier l'étirage de la première zone par rapport à celui de l'autre zone. En particulier, dans le cas où la première zone est une zone centrale qui autrement ne serait pas affectée par le déplacement conjoint du poinçon et du fond mobile par rapport au moule et au contre-moule, le piston permet de produire mécaniquement un étirage maîtrisé dans ladite première zone.

Au moins dans une phase terminale du soufflage de l'ébauche contre les parois de la cavité de moulage, le poinçon et le fond de moule libèrent l'ébauche, le fond de moule étant rétracté au moins jusqu'à fleur des parois fixes de la cavité de moulage.

Dans une première version, le piston peut être monté dans la cavité de moulage et il doit alors en général être également effacé au moins pendant la phase terminale du soufflage.

Il s'est cependant avéré avantageux que le piston agisse du côté du film opposé aux parois de la cavité de moulage, et que pendant le soufflage après ledit déplacement conjoint du piston et du fond de moule, ladite partie de la première zone d'étirage soit pincée entre le piston et une face de la cavité de moulage. Un tel pincement localisé, en particulier s'il est réalisé en un point remarquable tel que par exemple le centre du fond du récipient, permet de mieux maîtriser les déplacements de matière pendant le soufflage.

Il est avantageux qu'à la fin du déplacement conjoint du poinçon et du fond de moule, la zone de pincement soit située radialement à l'écart du pourtour intérieur de la cavité de moulage. Ainsi, les parois latérales de l'ébauche sont préservées du contact avec la paroi latérale de la cavité de moulage, ce qui évite un refroidissement prématuré avant le soufflage. En outre, ceci permet à la zone de fond de l'ébauche de se déployer pendant le soufflage, ceci grâce à une résorption de la déformation qui avait été produite par le piston.

De préférence, pendant l'étape de soufflage on injecte sur le film plastique un gaz sous une pression comprise entre 100 et 500 kPa environ.

Il est avantageux que l'étape de soufflage commence avant la fin de l'étape de déplacement conjoint du piston et du fond de moule. Le gaz soufflé entraîne alors le fond de moule dans sa position finale en même temps qu'il forme le récipient.

Avant l'arrivée du film face à la cavité de moulage, il peut être avantageux qu'une banderole continue et fermée, de la hauteur partielle ou totale de l'objet à réaliser, soit introduite dans le moule pour permettre par collage sur le film plastique formé, de renforcer et décorer le pourtour de l'objet obtenu. La banderole peut être par exemple en papier. Le collage résulte du simple contact avec le film plastique chauffé.

En variante, la banderole peut être remplacée par une étiquette qui est d'abord maintenue en place par une aspiration exercée à travers des orifices appropriés dans la paroi de la cavité de moulage, pour que cette étiquette se colle sur le film plastique formé par le soufflage, afin de décorer l'objet final obtenu.

Suivant un second aspect de l'invention, le dispositif de thermoformage, en particulier pour la mise en oeuvre d'un procédé selon le premier aspect, comprenant :
- un moule de formage et un contre-moule mobiles l'un par rapport à l'autre pour sélectivement tenir entre eux un film plastique chauffé dans un plan initial du film autour d'une cavité de moulage formée dans le moule;
- un poinçon mobile dans le contre-moule transversalement audit plan initial pour pénétrer de manière variable dans la cavité de moulage;
- un fond de moule mobile dans la cavité de moulage du moule transversalement audit plan initial, le poinçon et le fond de moule étant capables de définir entre eux une zone de pincement de film et de déplacer conjointement cette zone de pincement vers l'intérieur de la cavité de moulage
est caractérisé en ce que la zone de pincement a une géométrie conçue pour définir sur le film, en plus de la zone de pincement, deux zones d'étirage qui sont étirées indépendamment l'une de l'autre.

Selon une particularité très avantageuse de l'invention, le dispositif peut également comprendre un piston mobile relativement au poinçon ou au fond mobile pour déplacer une partie d'une première des zones d'étirage par rapport à la zone de pincement.

Selon que le piston est du côté du poinçon ou au contraire du côté du fond mobile, l'autre de ces éléments, c'est à dire le fond mobile et le poinçon respectivement, comporte de préférence un évidement dans lequel le piston peut faire saillie et engager la première zone d'étirage déformée par le piston, lorsque le poinçon et le fond mobile forment entre eux la zone de pincement.

Il est avantageux que le moule comprenne des moyens de refroidissement d'une partie au moins des parois de la cavité de moulage.

Ainsi, lors de l'étape de soufflage, le film initialement chauffé est rapidement refroidi.

Il est également avantageux de refroidir ou au moins de maintenir à une température modérée le poinçon et/ou le fond mobile et/ou le piston. Ainsi, ces éléments refroidissent les zones du film avec lequelles ils sont en contact, ceci renforce les zones du film les plus sollicités. En outre, ces zones restent ainsi plus épaisses et constituent des renforts de l'objet obtenu.

Pour refroidir le poinçon, on peut prévoir des moyens de refroidissement d'une partie au moins d'une paroi du contre-moule entourant le poinçon.

Pour le déplacement du poinçon, il peut être prévu un ensemble mécanique tel qu'un moteur électrique associé à une vis à billes.

Le déplacement du fond de moule peut être réalisé au moyen d'un vérin pneumatique, qui lorsqu'il est alimenté tend à placer le fond mobile en position saillante dans la cavité de moulage. Lorsque le poinçon pénètre dans la cavité de moulage, il vient s'appuyer sur le fond mobile avec interposition du film dans la zone de pincement. La pression appliquée au vérin pneumatique du fond mobile définit la pression exercée sur la matière dans la zone de pincement. Le déplacement conjoint du poinçon et fond mobile est alors généré par le mouvement du poinçon, lequel pousse le fond mobile vers le fond de la cavité de moulage.

Mais il est également concevable que le fond de moule soit déplaçable au moyen d'une commande telle qu'un moteur électrique.

Pour le déplacement du piston, il peut être prévu un vérin par exemple pneumatique à simple effet tendant à placer le piston en position saillante, et un ressort de rappel tendant à ramener le piston en position d'éffacement.

Suivant un troisième aspect de l'invention, l'appareil de fabrication d'une pluralité de récipients en matière plastique est caractérisé en ce qu'il comporte une pluralité de dispositifs selon le second aspect, qui fonctionnent simultanément sur un même film en matière plastique positionné dans lesdits dispositifs.

D'autres particularités et avantages de l'invention ressortiront encore de la description ci-après.

Aux dessins annexés :
- les figures 1 à 4 sont des vues schématiques en coupe axiale d'un dispositif de thermoformage selon l'invention, à quatre étapes successives du procédé selon l'invention;
- la figure 5 est une vue montrant huit exemples de configurations pour l'extrémité du poinçon et pour la zone de pincement;
- la figure 6 est une vue analogue à la figure 2, mais relative à un second mode de réalisation du dispositif selon l'invention; et
- la figure 7 est une vue en plan d'un appareil selon l'invention.

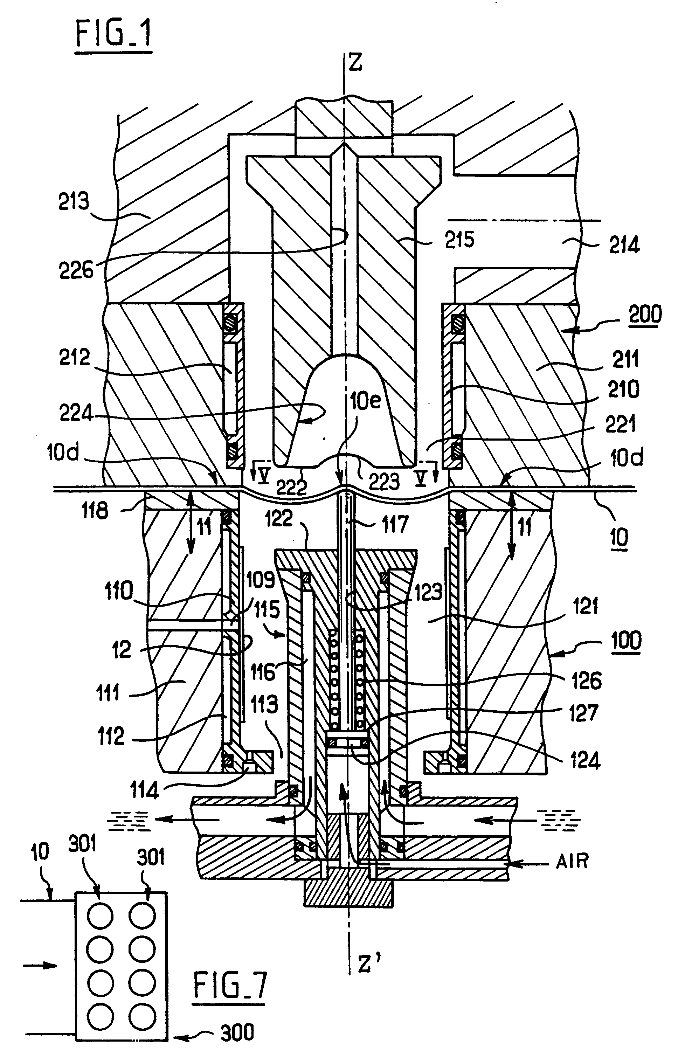

Dans l'exemple représenté aux figures 1 à 4, le dispositif de thermoformage de récipients du genre pot de yaourt comprend principalement un sous-ensemble inférieur appelé "moule" 100 et un sous-ensemble supérieur appelé "contre-moule" 200. Le moule 100 comporte une cavité de moulage 121 ouverte vers le haut, en regard de l'ouverture d'une cavité 221 du contre-moule 200. Bien que la cavité de moulage 121 puisse avoir, vue en plan, un contour irrégulier, on définit néanmoins une ligne verticale ZZ' que l'on appelle "axe de la cavité de moulage". Des moyens non-représentés, tels qu'un vérin, permettent de déplacer le moule 100 et le contre-moule 200 l'un par rapport à l'autre suivant une direction parallèle à l'axe ZZ' entre la position de moulage représentée aux figures 1 à 4 dans laquelle un film en matière plastique mono ou multi-matière 10 est pincé entre le moule 100 et le contre-moule 200 sur tout le pourtour de la cavité de moulage 121 selon un plan dit "initial", perpendiculaire à l'axe ZZ', et une position d'alimentation dans laquelle le moule 100 et le contre-moule 200 présentent entre eux un écartement vertical suffisant pour permettre le démoulage des objets thermoformés et l'introduction d'une partie suivante du film 10 pour réaliser l'objet thermoformé suivant.

Ce mouvement est illustré par les flèches 11 à la figure 1.

Le moule 100 comprend une chemise 110 dont la paroi intérieure définit la quasi totalité de la paroi latérale de la cavité de moulage et une partie radialement extérieure de la paroi de fond de la cavité de moulage 121.

La chemise 110 est insérée dans un bloc 111 du moule 100. Une chambre de refroidissement 112 est ménagée entre la chemise 110 et le bloc 111 pour la circulation d'un liquide de refroidissement. La base de la chemise 110 comporte des orifices 114 pour l'échappement de l'air contenu dans la cavité de moulage 121 pendant la réalisation du récipient à former.

Le moule 100 comprend en outre une plaque supérieure 118 qui assure le pincement du film plastique 10 avec le contre-moule 200 autour de la cavité 121 comme il a été exposé plus haut, et le refroidissement du film dans cette région tenue 10d, qui n'est donc pas destinée à subir le travail de thermoformage.

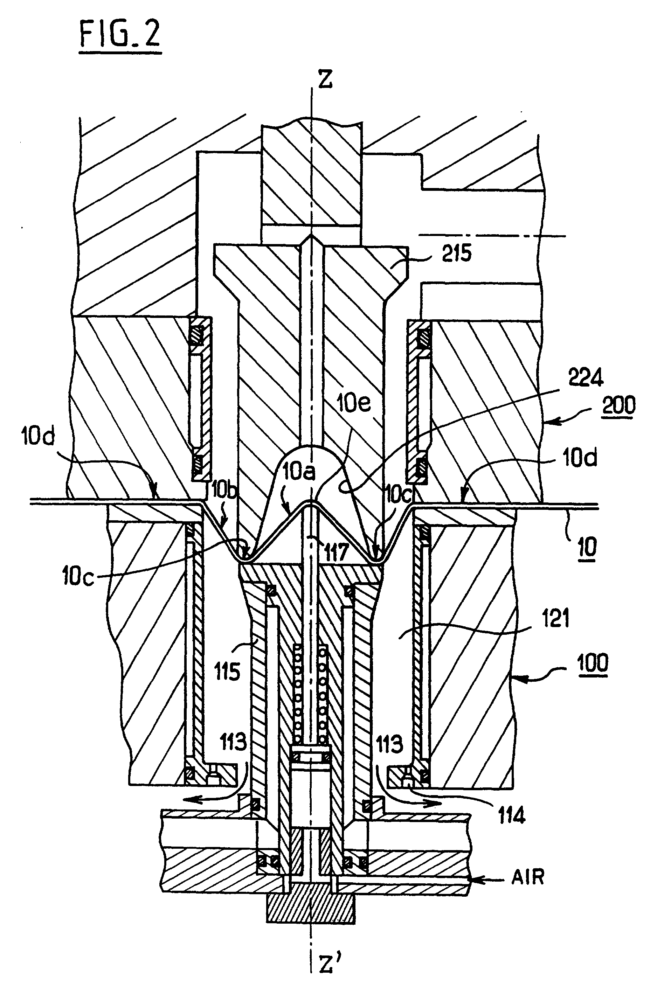

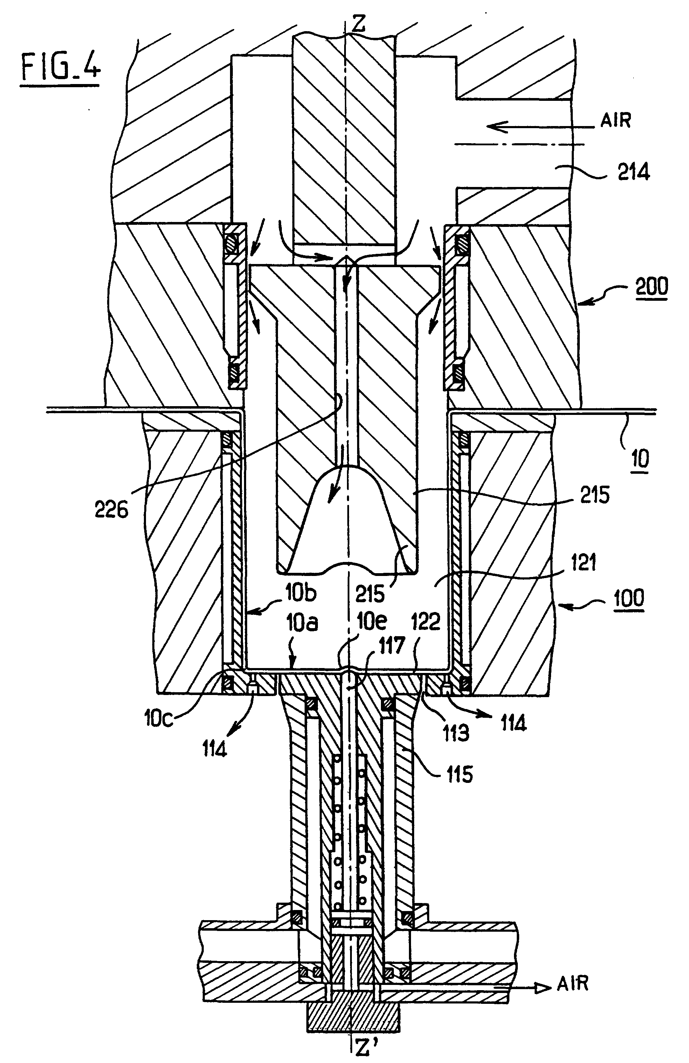

Dans le fond de la cavité de moulage 121, la chemise 110 comporte un large orifice central 113 à travers lequel un dispositif appelé "fond de moule mobile" 115 peut se déplacer suivant l'axe ZZ' pour faire plus ou moins saillie dans la cavité de moulage 121 (figures 1 et 2), ou au contraire prendre une position effacée (figure 4). Dans la position effacée du fond de moule 115, une face supérieure 122 du fond de moule ferme sensiblement l'orifice 113 de la chemise 110 et complète ainsi les surfaces intérieures définissant la cavité de moulage 121 du moule 100. Toutefois, un interstice annulaire peut subsister entre la face supérieure 122 et le pourtour de l'orifice 113 de la chemise 110 pour compléter la fonction d'échappement d'air assurée par les orifices 114.

Le fond mobile 115 comporte un alésage central 123 qui débouche à travers la face supérieure 122 selon l'axe ZZ' et dans lequel est monté un piston 117 qui est mobile entre la position de saillie maximum dans la cavité de moulage 121, représentée aux figures 1 à 3, et la position effacée visible à la figure 4 où l'extrémité libre du piston 117 complète la surface intérieure de la cavité de moulage 121 et plus particulièrement la paroi 122 du fond mobile 115.

Pour ce mouvement, le piston 117 est solidaire d'un piston de commande pneumatique 124 qui peut être soumis à l'action d'air comprimé pour pousser le piston 117 en position saillante à l'encontre de l'action d'un ressort de rappel 126 agissant sur l'autre face du piston de commande 124. Le ressort 126 ramène automatiquement le piston 117 en position effacée lorsque l'arrivée d'air comprimé sous le piston 124 est interrompue.

Un épaulement 127 de l'alésage 123 reçoit le piston de commande 124 en butée lorsque le piston 117 est en position saillante maximale (figures 1 à 3).

Autour de l'alésage 123 et sous la face supérieure 122, le fond mobile 115 présente une double paroi avec entre les deux parois une chambre 116 de circulation d'un liquide de refroidissement permettant de refroidir la face 122 ou du moins d'en modérer la température par rapport à celle du film chauffé 10.

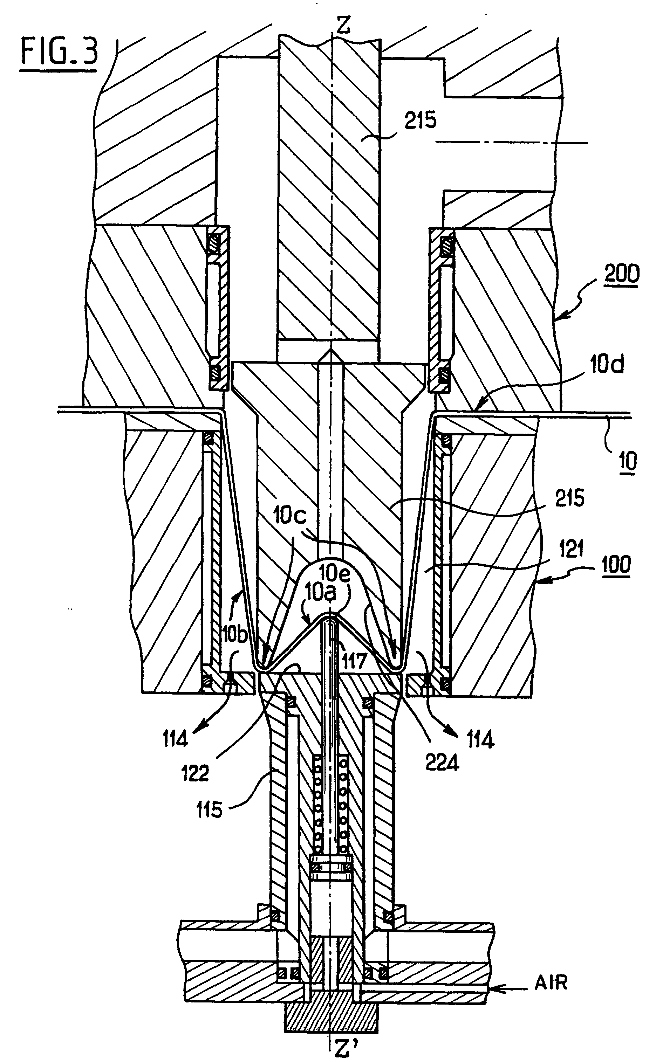

Le contre-moule 200 comprend une chemise annulaire 210 insérée dans un bloc 211 avec entre eux une chambre annulaire 212 pour la circulation d'un liquide de refroidissement, en vue de refroidir la surface de la chemise 210 qui contribue à définir la cavité 221. Un poinçon 215 est mobile dans la cavité 221 suivant l'axe ZZ' entre la position rétractée représentée à la figure 1 jusqu'à une position de pénétration dans la cavité de moulage 121 jusqu'au fond de cette dernière comme représenté à la figure 3. Il y a entre le pourtour du poinçon 215 et la surface latérale intérieure de la cavité de moulage 121 un écart radial substantiel, très supérieur à l'épaisseur du film plastique 10.

A son extrémité tournée vers l'intérieur de la cavité 121, le poinçon 215 présente autour de l'axe ZZ' un bossage annulaire 222 qui peut être continu mais qui de préférence, comme dans l'exemple représenté, est constitué de segments avec entre eux des échancrures 223 formant discontinuité (figure 1).

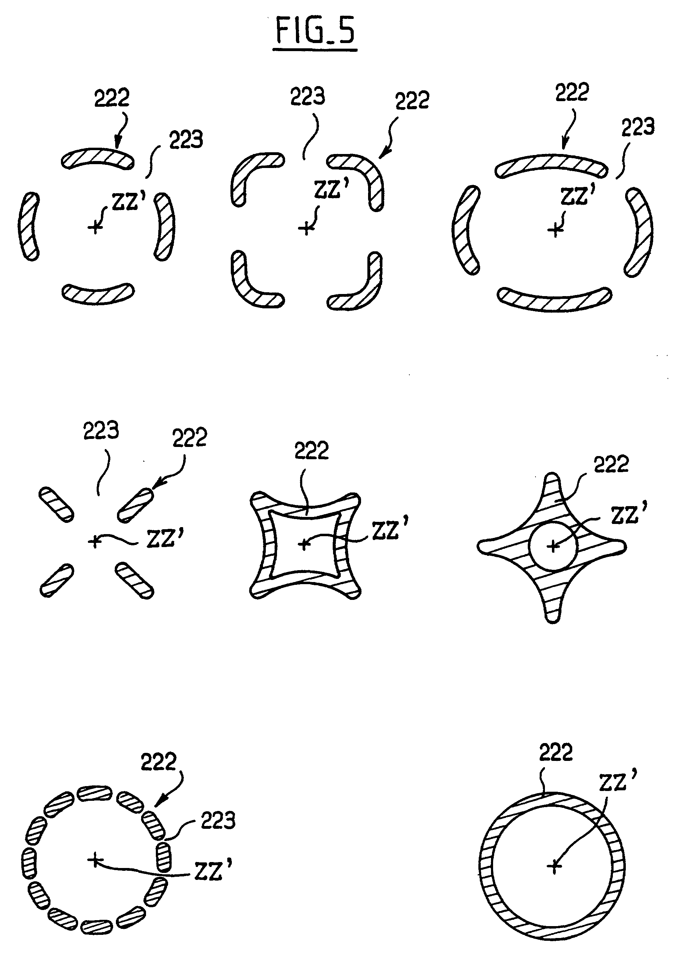

La figure 5 représente en coupe suivant V-V de la figure 1, huit possibilités pour la forme du bossage 222 et des éventuelles discontinuités 223 qu'il présente.

La mobilité relative du fond mobile 115 et du poinçon 215 permet à ceux-ci de prendre l'un par rapport à l'autre une position mutuelle d'écartement (figures 1 et 4) ou au contraire une position de pincement (figures 2 et 3) dans laquelle le bossage 222 pince le film 10 contre des zones correspondantes de la face supérieure 122 du fond mobile 115. La zone du film 10 qui est pincée entre la face 122 du fond mobile 115 et le bossage 222 du poinçon 215 est appelée zone de pincement 10c, (figures 2 et 3). La zone de pincement 10c qui est de forme générale annulaire avec une aire très faible par rapport à l'aire de film 10 soumise au thermoformage, subdivise le film 10 à thermoformer en une première zone d'étirage 10a située radialement à l'intérieur de la zone de pincement 10c et qui sera destinée à constituer le fond du récipient, et une seconde zone d'étirage 10b, située radialement à l'extérieur de la zone de pincement 10c, entre celle-ci et la zone 10d qui est tenue entre le moule 100 et le contre moule 200 tout autour de la cavité de moulage 121. La formé de la zone de pincement 10c correspond sensiblement à la forme du bossage 222 telle que représentée au titre de divers exemples à la figure 5. Lorsque cette forme comporte des échancrures 223, celles-ci correspondent à des interruptions de la zone de pincement.

Radialement à l'intérieur du bossage 222, le poinçon 215 présente un évidement 224. Comme le montrent les figures 2 et 3, lorsque le piston 117 est en position saillante et que le fond mobile 115 et le piston 215 sont rapprochés l'un de l'autre pour réaliser le pincement du film 10c, le piston 117 et la région d'étirage 10a déformée sensiblement en cône font saillie dans l'évidement 224 du poinçon 215.

Le contre-moule 200 possède au-dessus du bloc 211 un bloc supérieur 213 muni d'un orifice 214 d'arrivée d'air sous pression dans la chambre 221 du contre-moule 200, aussi bien autour du poinçon 215 que dans l'évidement 224 à travers une canalisation interne 226 du poinçon 215.

On va maintenant décrire le fonctionnement du dispositif des figures 1 à 4, en y incluant la description du procédé selon l'invention.

Dans une étape préliminaire représentée à la figure 1, le poinçon 215 est en position rétractée dans le contre-moule 200 alors que le fond mobile 115 est en position saillante dans la cavité de moulage 121, le piston 117 étant lui-même en position saillante relativement au fond mobile 115. Après avoir introduit le film 10 chauffé entre le moule 100 et le contre-moule 200, on a déplacé le moule 100 suivant l'axe ZZ' vers le contre-moule 200 jusqu'à venir tenir le film 10 dans la région 10d. Le film 10 chauffé est malléable. De ce fait, il fléchit à l'intérieur de la cavité 121 mais il est soutenu en partie centrale 10e par l'extrémité du piston 117. Celle-ci se trouve à ce stade sensiblement dans le plan initial. Le poinçon 215 et la face supérieure 122 du fond 115 sont largement écartés l'un de l'autre.

Dans l'étape représentée à la figure 2, on a déplacé le poinçon 215 suivant l'axe ZZ' vers l'intérieur de la cavité 121 pour que le bossage terminal 222 du poinçon 215 vienne pincer le film 10 dans la zone de pincement 10c, décrite précédemment. Il en résulte un premier étirage de la deuxième zone 10b située radialement à l'extérieur de la zone de pincement 10c entre la zone de pincement 10c et la zone tenue 10d. En outre, comme le piston 117 demeure en position saillante relativement au fond mobile 115, la zone 10a est déformée en cône, avec la partie 10e qui se trouve, en mouvement relatif, déplacée vers l'extérieur de la cavité de moulage 121 par rapport à la périphérie de ce cône, constituée par la zone de pincement 10c. De l'air occupant la cavité 121 est chassé par les orifices 113 et 114.

Dans l'étape suivante représentée à la figure 3, on déplace conjointement le poinçon 215 et le fond mobile 115 vers le fond de la cavité 121 jusqu'à ce que la face supérieure 122 du fond mobile 115 atteigne la position dans laquelle elle constitue une surface de la cavité de moulage 121.

Pendant ce mouvement, le poinçon 215 et le fond mobile 115 restent fixes l'un par rapport à l'autre, et le piston 117 demeure en position saillante relativement au fond mobile 115. Cette étape assure l'étirage de la deuxième zone d'étirage 10b destinée à former la paroi latérale du récipient, entre la zone de pincement 10c et la zone de bord 10d tenue entre le moule 100 et le contre-moule 200.

On remarque qu'à ce stade, les deux zones d'étirage 10a et 10b ont subi des étirages bien maîtrisés indépendants l'un de l'autre. La zone de pincement 10c constitue en quelque sorte une barrière isolant l'une de l'autre les zones d'étirage 10a et 10b en ce qui concerne l'étirage subi. Ceci est vrai même si le bossage 222 présente des échancrures 223. Dans la zone d'étirage 10a, l'étirage réalisé est pour l'essentiel déterminé par le rapport entre la hauteur de saillie formée par le piston 117 et le diamètre moyen de la zone de pincement 10c.

Pour la zone d'étirage 10b, l'étirage subi est essentiellement déterminé par l'écartement radial entre la zone de pincement 10c et la zone tenue au bord 10d, par rapport à la profondeur de la cavité de moulage 121.

Au cours de l'étape de la figure 3, ou étape de déplacement conjoint, les zones d'étirage 10a et 10b sont dans une large mesure préservées de tout contact avec les surfaces refroidies du dispositif. Seule la zone de pincement 10c, par son contact avec le fond 115 refroidi, subit un étirement moindre, maîtrisé, grâce auquel cette zone de pincement constituera une zone de renfort sur le fond du récipient. La partie 10e poussée par le piston 117 subit également un certain refroidissement qui est sensiblement sans incidence sur le récipient qui sera obtenu.

Pendant l'étape de déplacement conjoint, l'air continue de s'échapper par les orifices 113, 114.

Dans l'étape représentée à la figure 4, le poinçon 215 se rétracte vers le contre-moule 200 et le piston 117 s'efface dans le fond de moule 115. Au plus tard à ce stade, de l'air sous pression est envoyé par le conduit 214 et à travers les canalisations 226 autour et au travers du poinçon 215 pour souffler l'ébauche à l'intérieur de la cavité de moulage 121 et plaquer ainsi le film constitutif de l'ébauche contre les surfaces refroidies de la cavité de moulage 121. L'air continue de s'échapper par les orifices 113 et 114. Au cours de cette opération, la première zone d'étirage 10a se déploie contre le fond de la cavité de moulage en passant de la forme conique visible aux figures 2 et 3 à une forme plane. Le déplacement de la zone 10e qui était imposé par le piston 117 se résorbe et la zone de pincement localisée 10c se place sensiblement le long de l'arête périphérique délimitant le pourtour du fond du récipient réalisé. Ainsi, du début à la fin du processus, l'étirage subi par la zone 10a est relativement réduit, essentiellement constitué par l'action du piston 117, le soufflage assurant plutôt un déploiement avec au besoin un étirage complémentaire. La deuxième zone d'étirage 10b, nettement plus étirée que la première compte-tenu de ce qui a été exposé plus haut, se place contre la surface latérale de la cavité de moulage 121, pour constituer la paroi latérale du récipient obtenu.

Comme illustré schématiquement à la figure 1, on a pu au besoin placer dans la cavité de moulage 121 avant le rapprochement du moule 100 et du contre-moule 200 suivant les flèches 11, une banderole annulaire 12 réalisée par exemple en papier. Dans ce cas, à l'étape de soufflage de la figure 4, la zone 10b du film chauffé vient se coller contre la banderole, qui s'intègre ainsi au récipient réalisé en formant une sorte de frette. La banderole peut comporter sur sa face radialement extérieure des éléments décoratifs ou des messages. La banderole 12 peut être remplacée par une étiquette ne couvrant qu'une partie de la périphérie intérieure de la cavité 121. Pour plaquer la banderole ou l'étiquette 12, on peut prévoir à travers la surface latérale de la cavité de moulage 121 des orifices d'aspiration 109.

Ensuite, après l'étape de la figure 4 le moule 100 se sépare du moule 200 suivant les flèches 11 de la figure 1, pour permettre le démoulage.

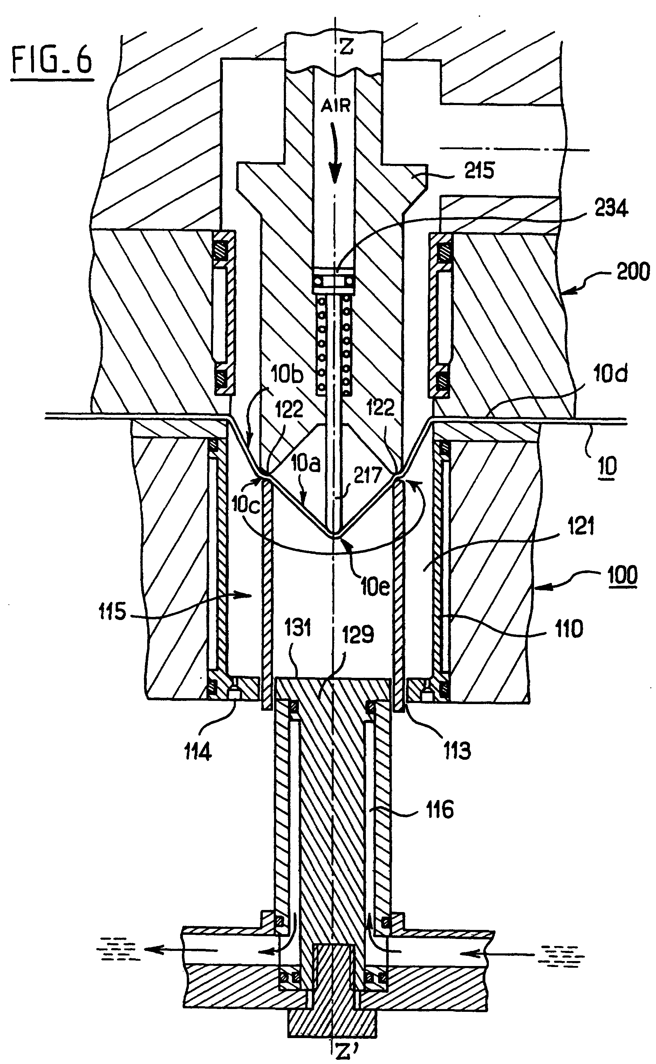

L'exemple représenté à la figure 6 ne sera décrit que pour ses différences par rapport à celui des figures 1 à 4. Les même références numériques seront dans la mesure du possible utilisées. Le fond mobile 115 a maintenant une forme tubulaire et l'orifice 113 est formé annulaire entre un bord radialement intérieur de la chemise 110 et le bord radialement extérieur d'un fond de moule fixe 129 dans lequel se trouve maintenant formée la chambre 116 de circulation du fluide de refroidissement. Le fond 129 a une face supérieure fixe 131 qui constitue une des faces définissant la cavité de moulage 121. Le bord annulaire supérieur du fond mobile 115 a une forme qui lui permet de coopérer avec le bossage 122 du poinçon 215 pour former la zone de pincement 10c.

Le piston 217 est maintenant monté dans le poinçon 215 pour être mobile entre la position saillante représentée à la figure 6 dans laquelle il fait saillie vers la cavité de moulage 121 à l'intérieur de l'évidement défini par l'intérieur du fond tubulaire 115, et une position non-représentée d'effacement à l'intérieur du poinçon 215.

Le fonctionnement de ce dispositif va maintenant être décrit en même temps que les variantes qui en découlent pour le procédé selon l'invention.

Lorsque le poinçon 215 se déplace pour venir former la zone de pincement 10c, le piston 217 est de préférence en position rétractée, puis on le fait passer en position saillante seulement après formation de la zone de pincement 10c pour aboutir ainsi à la situation représentée à la figure 6. La partie 10e de la zone d'étirage 10a est déplacée de manière à étirer en cône la première zone d'étirage 10a, le cône pointant cette fois-ci vers l'intérieur de la cavité de moulage.

Au cours du déplacement conjoint du fond mobile 115 et du poinçon 215, la zone d'étirage 10b est à son tour étirée sensiblement comme décrit pour l'exemple précédent. A un certain stade de ce mouvement, la partie 10e rencontre la face supérieure 131 du fond fixe 129. Il est alors avantageux de stopper le mouvement conjoint et de maintenir une certaine pression d'air contre le piston de commande 234 du piston 217, pour maintenir l'appui de la zone 10e contre la face 131 par l'extrémité du piston 217.

Ensuite, on procède à l'étape de soufflage, pendant laquelle on rétracte le fond 115 tout en maintenant l'appui de la zone 10e contre la face 131 par le piston 217. On a constaté que le maintien de cet appui permettait une parfaite symétrie de la distribution de matière autour de l'axe ZZ' dans le récipient obtenu.

Le dispositif de moulage selon l'invention peut faire partie d'un appareil 300 comprenant un batterie de par exemple huit dispositifs 301 tels que décrits en référence aux figures 1 à 6 qui fonctionnent simultanément, les blocs 111 des moules 100 étant solidaires les uns des autres, de même que les blocs 211 et 213 des contre-moules 200.

Un tel appareil industriel produit des récipients par groupe de par exemple huit qui seront ou bien séparés les uns des autres par découpage ou bien remplis et commercialisés à l'état groupé.

L'invention s'applique tout particulièrement à la fabrication de récipients pour produits alimentaires tels que les produits laitiers, les yaourts, les crèmes dessert, etc.

Des variantes sont possibles. Le piston pourrait n'étirer la zone 10a que vers la fin de l'étape de déplacement conjoint.

## Revendications

1. procédé de thermoformage comprenant les étapes de:
- tenue du film de matière plastique chauffé (10) le long du pourtour d'une cavité de moulage (121);
- pincement du film entre un poinçon (215) et un fond de moule mobile (115);
- déplacement conjoint du poinçon (215) et du fond de moule (115) vers l'intérieur de la cavité de moulage (121);
- soufflage de l'ébauche ainsi formée (10a, 10b) contre des parois intérieures refroidies de la cavité de moulage (121),
**caractérisé en ce que** le poinçon (215) et le fond de moule (115) pincent le film le long d'au moins une zone de pincement localisée (10c) dont la géométrie est choisie pour définir, en plus de la zone de pincement, deux zones d'étirage (10a, 10b) qui sont étirées de manière sensiblement indépendante l'une de l'autre.

2. Procédé selon la revendication 1, **caractérisé en ce que** la zone de pincement (10c) est de forme générale annulaire, les zones d'étirage (10a, 10b) étant situées à l'intérieur et respectivement à l'extérieur de la zone de pincement.

3. Procédé selon la revendication 1 ou 2, **caractérisé en ce que** la zone de pincement (10c) est formée de plusieurs segments disjoints.

4. Procédé selon l'une des revendications 1 à 3, **caractérisé en ce que** dans une première (10a) des zones d'étirage, on produit une partie au moins de l'étirage par un piston (117, 217) qui déplace une partie (10e) de la première zone (10a) par rapport à ladite zone de pincement localisée (10c).

5. Procédé selon la revendication 4, **caractérisé en ce que** le piston (117) libère la première zone (10a) pendant une étape de soufflage qui suit l'étirage dans les deux zones (10a, 10b) par le poinçon (215), le fond de moule (115) et le piston (117).

6. Procédé selon la revendication 4 ou 5, **caractérisé en ce que** la première zone (10a) est une zone centrale, destinée à constituer le fond d'un récipient à mouler, l'autre zone (10b) étant une zone périphérique destinée à constituer une paroi latérale du récipient.

7. Procédé selon l'une des revendications 4 à 6, **caractérisé en ce que** le poinçon (215) et le fond de moule (115) exercent conjointement avec le piston (117, 217) sensiblement la totalité de l'étirage prévu pour la première zone (10a).

8. Procédé selon la revendication 7, **caractérisé en ce qu'**au moyen du piston on déplace ladite partie (10e) de la première zone (10a) vers l'intérieur de la cavité de moulage (121), et **en ce que** pendant le soufflage après ledit déplacement conjoint du poinçon (215) et du fond de moule (115), ladite partie (10e) de la première zone (10a) est pincée entre le piston (217) et une face (131) de la cavité de moulage.

9. Procédé selon l'une des revendications 4 à 8, **caractérisé en ce que** le piston (117, 217) est sensiblement central.

10. Procédé selon l'une des revendications 4 à 9, **caractérisé en ce que** l'on pince le film (10) entre le poinçon (215) et le fond de moule (115) avant de déplacer ladite partie (10e) de la première zone d'étirage (10a) au moyen du piston (217) par rapport à la zone de pincement localisée (10c).

11. Procédé selon l'une des revendications 4 à 10, **caractérisé en ce qu'**à la fin du déplacement conjoint du poinçon (215) et du fond de moule (115), la zone de pincement (10c) est située radialement à l'écart du pourtour intérieur de la cavité de moulage (121).

12. Procédé selon l'une des revendications 4 à 11, **caractérisé en ce qu'**après la fin du déplacement conjoint du poinçon (215) et du fond de moule (115), on souffle le film (10) contre la surface de la cavité de moulage (121) pour que la première zone (10a) se déploie dans le fond de la cavité de moulage par résorption du déplacement que ladite partie (10e) de la première zone (10a) avait subi sous l'action du piston (117, 217).

13. Procédé selon l'une des revendications 1 à 12, **caractérisé en ce que** l'on définit des étirages différents pour les deux zones d'étirage (10a, 10b).

14. Procédé selon l'une des revendications 1 à 13, **caractérisé en ce que** pendant l'étape de soufflage on injecte sur le film plastique (10) une pression de gaz comprise entre 100 et 500 kPa environ.

15. Procédé selon l'une quelconque des revendications 1 à 14, **caractérisé en ce que** l'étape de soufflage commence avant la fin de l'étape de déplacement conjoint, et le gaz soufflé entraîne le fond de moule mobile (115) dans sa position finale en même temps qu'il forme le récipient.

16. Procédé selon l'une quelconque des revendications 1 à 15, **caractérisé en ce qu'**avant l'étape de tenue, une banderole continue et fermée (12) est introduite dans la cavité de moulage (121) pour permettre, par collage sur le film plastique formé, de renforcer et décorer le pourtour de l'objet obtenu.

17. Procédé selon l'une quelconque des revendications 1 à 15, **caractérisé en ce qu'**avant l'étape de tenue une étiquette est introduite dans le moule et maintenue en place par le vide pour permettre par collage sur le film plastique formé de décorer l'objet final obtenu.

18. Dispositif de thermoformage, en particulier pour la mise en oeuvre d'un procédé selon l'une des revendications 1 à 17, comprenant :
- un moule de formage (100) et un contre-moule (200) mobiles l'un par rapport à l'autre pour sélectivement tenir entre eux un film plastique chauffé (10) dans un plan initial du film autour d'une cavité de moulage (121) formée dans le moule;
- un poinçon (215) mobile dans le contre-moule (200)transversalement audit plan initial pour pénétrer de manière variable dans la cavité de moulage (121);
- un fond de moule mobile (115) dans la cavité de moulage (121) du moule transversalement audit plan initial, le poinçon (215) et le fond de moule (115) étant capables de définir entre eux une zone de pincement (10c) de film et de déplacer conjointement cette zone de pincement vers l'intérieur de la cavité de moulage (121);
**caractérisé en ce que** la zone de pincement (10c) est configurée pour définir sur le film, en plus de la zone de pincement (10c), deux zones d'étirage (10a, 10b) qui sont étirables indépendamment l'une de l'autre.

19. Dispositif selon la revendication 18, **caractérisé en ce que** la zone de pincement (10c) a une forme générale annulaire, une première zone d'étirage (10a) étant située à l'intérieur et l'autre (10b) à l'extérieur de la zone de pincement (10c).

20. Dispositif selon la revendication 18 ou 19, **caractérisé en ce que** la zone de pincement (10c) est formée de segments disjoints.

21. Dispositif selon l'une des revendications 18 à 20, **caractérisé en ce qu'**il comprend en outre un piston (217) mobile relativement au poinçon (215) pour déplacer une partie (10e) d'une première (10a) des zones d'étirage par rapport à la zone de pincement (10c).

22. Dispositif selon la revendication 21, **caractérisé en ce qu'**il comprend, dans le fond mobile (115), un évidement dans lequel le piston (217) peut faire saillie.

23. Dispositif selon l'une des revendications 18 à 20, **caractérisé en ce qu'**il comprend en outre un piston (117) mobile relativement au fond mobile (115) pour déplacer une partie (10e) d'une première (10a) des zones d'étirage par rapport à la zone de pincement (10c).

24. Dispositif selon la revendication 23, **caractérisé en ce qu'**il comprend, dans le poinçon (215), un évidement (224) dans lequel le piston (117) peut faire saillie.

25. Dispositif selon l'une des revendications 21 à 24, **caractérisé en ce que** le piston (117, 217) est sensiblement axial dans la cavité de moulage (121).

26. Dispositif selon l'une des revendications 18 à 25, **caractérisé en ce que** le moule (100) comprend des moyens (112, 116) de refroidissement d'une partie au moins des surfaces de la cavité de moulage (121).

27. Dispositif selon la revendication 26, **caractérisé en ce que** le contre-moule (200) comprend des moyens (212) de refroidissement d'une paroi entourant le poinçon (215).

28. Dispositif selon l'une des revendications 18 à 27, **caractérisé en ce que** le fond mobile (115) comporte des moyens de refroidissement (116).

29. Dispositif selon l'une des revendications 18 à 28, **caractérisé en ce qu'**il est prévu dans le contre-moule (200) un orifice (214) d'injection de gaz sous pression pour plaquer le film plastique (10) sur les surfaces de la cavité du moulage (121), et des orifices d'échappement (113; 114) pour l'air compris en service entre le film plastique (10) et les surfaces de la cavité de moulage (100).

30. Appareil de fabrication d'une pluralité de récipients en matière plastique **caractérisé en ce qu'**il comporte une pluralité de dispositifs selon l'une des revendication 18 à 29, qui fonctionnent simultanément sur un seul film (10) en matière plastique positionné dans lesdits dispositifs.

## Patentansprüche

1. Verfahren zum Thermoformen, mit den folgenden Schritten :
- Halten der erhitzten Kunststofffolie (10) längs des Umfangs eines Formungshohlraums (121),
- Einklemmen der Folie zwischen einem Stempel (215) und einem beweglichen Formboden (115),
- gemeinsame Bewegung des Stempels (215) und des Formbodens (115) auf das Innere des Formungshohlraums (121) zu,
- Blasen des auf diese Weise gebildeten Rohlings (10a, 10b) gegen gekühlte Innenwände des Formungshohlraums (121),
**dadurch gekennzeichnet, daß** der Stempel (215) und der Formboden (115) die Folie längs mindestens eines lokalisierten Klemmbereichs (10c) einklemmen, dessen Geometrie so gewählt ist, daß zusätzlich zum Klemmbereich zwei Ziehbereiche abgegrenzt werden, die im wesentlichen unabhängig voneinander gezogen werden.

2. Verfahren nach Anspruch 1, **dadurch gekennzeichnet, daß** der Klemmbereich (10c) allgemein ringförmig ist, wobei die Ziehbereiche (10a, 10b) innerhalb bzw. außerhalb des Klemmbereichs gelegen sind.

3. Verfahren nach Anspruch 1 oder 2, **dadurch gekennzeichnet, daß** der Klemmbereich (10c) aus mehreren getrennten Segmenten gebildet ist.

4. Verfahren nach einem der Ansprüche 1 bis 3, **dadurch gekennzeichnet, daß** man in einem ersten (10a) der Ziebereiche mindestens einen Teil der Ziehung mit Hilfe eines Kolbens (117, 217) vornimmt, der einen Teil (10e) des ersten Bereichs (10a) bezüglich dieses lokalisierten Klemmbereichs (10c) bewegt.

5. Verfahren nach Anspruch 4, **dadurch gekennzeichnet, daß** der Kolben (117) den ersten Bereich (10a) während eines Blasschritts freigibt, der auf das Ziehen in den beiden Bereichen (10a, 10b) durch den Stempel (215), den Formboden (115) und den Kolben (117) folgt.

6. Verfahren nach Anspruch 4 oder 5, **dadurch gekennzeichnet, daß** der erste Bereich (10a) ein zentraler Bereich ist, der dazu bestimmt ist, den Boden eines zu formenden Behälters zu bilden, wobei der andere Bereich (10b) ein Umfangsbereich ist, der dazu bestimmt ist, eine Seitenwand des Behälters zu bilden.

7. Verfahren nach einem der Ansprüche 4 bis 6, **dadurch gekennzeichnet, daß** der Stempel (215) und der Formboden (115) zusammen mit dem Kolben (117, 217) im wesentlichen die gesamte für den ersten Bereich (10a) vorgesehene Ziehung bewirken.

8. Verfahren nach Anspruch 7, **dadurch gekennzeichnet, daß** man den Teil (10e) des ersten Bereichs (10a) mit Hilfe des Kolbens auf das Innere des Formungshohlraums (121) zu bewegt und daß dieser Teil (10e) des ersten Bereichs (10a) während des Blasens nach dieser gemeinsamen Bewegung des Stempels (215) und des Formbodens (115) zwischen dem Kolben (217) und einer Seite (131) des Formungshohlraums eingeklemmt wird.

9. Verfahren nach einem der Ansprüche 4 bis 8, **dadurch gekennzeichnet, daß** der Kolben (117, 217) im wesentlichen zentral angeordnet ist.

10. Verfahren nach einem der Ansprüche 4 bis 9, **dadurch gekennzeichnet, daß** man die Folie (10) zwischen dem Stempel (215) und dem Formboden (115) einklemmt, bevor der Teil (10e) des ersten Ziehbereichs (10a) mit Hilfe des Kolbens (217) bezüglich des lokalisierten Klemmbereichs (10c) bewegt wird.

11. Verfahren nach einem der Ansprüche 4 bis 10, **dadurch gekennzeichnet, daß** der Klemmbereich (10c) am Ende der gemeinsamen Bewegung des Stempels (215) und des Formbodens (115) radial in einem Abstand vom Innenumfang des Formungshohlraums (121) gelegen ist.

12. Verfahren nach einem der Ansprüche 4 bis 11, **dadurch gekennzeichnet, daß** man die Folie (10) nach dem Ende der gemeinsamen Bewegung des Stempels (215) und des Formbodens (115) gegen die Oberfläche des Formungshohlraums (121) bläst, so daß sich der erste Bereich (10a) im Boden des Formungshohlraums durch Resorbierung der Bewegung entfaltet, die der Teil (10e) des ersten Bereichs (10a) unter der Einwirkung des Kolbens (117, 217) erfahren hat.

13. Verfahren nach einem der Ansprüche 1 bis 12, **dadurch gekennzeichnet, daß** man bei den beiden Ziehbereichen (10a, 10b) verschiedene Ziehungen vornimmt.

14. Verfahren nach einem der Ansprüche 1 bis 13, **dadurch gekennzeichnet, daß** man während des Blasschritts auf die Kunststofffolie (10) einen Gasdruck zwischen etwa 100 und 500 kPa einspritzt.

15. Verfahren nach einem der Ansprüche 1 bis 14, **dadurch gekennzeichnet, daß** der Blasschritt vor dem Ende des Schritts der gemeinsamen Bewegung beginnt und das eingeblasene Gas gleichzeitig damit, daß es den Behälter formt, den beweglichen Formboden (115) in seine Endstellung mitnimmt.

16. Verfahren nach einem der Ansprüche 1 bis 15, **dadurch gekennzeichnet, daß** vor dem Schritt des Haltens eine durchgehende und geschlossene Banderole (12) in den Formungshohlraum (121) eingeführt wird, um durch Aufkleben auf der geformten Kunststofffolie eine Verstärkung und Verzierung des Umfangs des erhaltenen Objekts zu gestatten.

17. Verfahren nach einem der Ansprüche 1 bis 15, **dadurch gekennzeichnet, daß** vor dem Schritt des Haltens in die Form ein Etikett eingeführt wird und durch den Unterdruck an seinem Platz gehalten wird, um durch Aufkleben auf die geformte Kunststofffolie eine Verzierung des erhaltenen fertigen Objekts zu gestatten.

18. Vorrichtung zum Thermoformen, insbesondere zur Durchführung des Verfahrens nach einem der Ansprüche 1 bis 17, umfassend:
- eine Form (100) und eine Gegenform (200), die zueinander beweglich sind, um zwischen sich wahlweise eine erhitzte Kunststofffolie (10) in einer Ausgangsebene der Folie um einen in der Form gebildeten Formungshohlraum (121) herum zu halten,
- einen Stempel (215), der in der Gegenform (200) quer zu dieser Ausgangsebene beweglich ist, um auf veränderliche Weise in den Formungshohlraum (121) einzutreten,
- einen Formboden (115) der in dem Formungshohlraum (121) der Form quer zu dieser Ausgangsebene beweglich ist, wobei der Stempel (215) und der Formboden (215) zwischen sich einen Folienklemmbereich (10c) bilden können und zusammen diesen Klemmbereich auf das Innere des Formungshohlraums (121) zu bewegen können,
**dadurch gekennzeichnet, daß** der Klemmbereich (10c) so gestaltet ist, daß auf der Folie zusätzlich zu dem Klemmbereich (10c) zwei Ziehbereiche (10a, 10b) abgegrenzt werden, die voneinander unabhängig gezogen werden können.

19. Vorrichtung nach Anspruch 18, **dadurch gekennzeichnet, daß** der Klemmbereich (10c) allgemein ringförmig ist, wobei ein erster Ziehbereich (10a) innerhalb und der andere (10b) außerhalb des Klemmbereichs (10c) gelegen ist.

20. Vorrichtung nach Anspruch 18 oder 19, **dadurch gekennzeichnet, daß** der Klemmbereich (10c) aus getrennten Segmenten gebildet ist.

21. Vorrichtung nach einem der Ansprüche 18 bis 20, **dadurch gekennzeichnet, daß** sie außerdem einen Kolben (217) aufweist, der bezüglich des Stempels (215) beweglich ist, um einen Teil (10e) eines ersten (10a) der Ziehbereiche bezüglich des Klemmbereichs (10c) zu bewegen.

22. Vorrichtung nach Anspruch 21, **dadurch gekennzeichnet, daß** sie im beweglichen Boden (115) eine Aussparung aufweist, in welcher der Kolben (217) vorstehen kann.

23. Vorrichtung nach einem der Ansprüche 18 bis 20, **dadurch gekennzeichnet, daß** sie außerdem einen Kolben (117) aufweist, der bezüglich des beweglichen Bodens (115) beweglich ist, um einen Teil (10e) einer ersten (10a) der Ziehbereiche bezüglich des Klemmbereichs (10c) zu bewegen.

24. Vorrichtung nach Anspruch 23, **dadurch gekennzeichnet, daß** sie in dem Stempel (215) eine Aussparung (224) aufweist, in der der Kolben (117) vorstehen kann.

25. Vorrichtung nach einem der Ansprüche 21 bis 24, **dadurch gekennzeichnet, daß** der Kolben (117, 217) in dem Formungshohlraum (121) im wesentlichen axial angeordnet ist.

26. Vorrichtung nach einem der Ansprüche 18 bis 25, **dadurch gekennzeichnet, daß** die Form (100) Mittel (112, 116) zum Kühlen mindestens eines Teils der Oberflächen des Formungshohlraums (121) aufweist.

27. Vorrichtung nach Anspruch 26, **dadurch gekennzeichnet, daß** die Gegenform (200) Mittel (212) zum Kühlen einer den Stempel (215) umgebenden Wand aufweist.

28. Vorrichtung nach einem der Ansprüche 18 bis 27, **dadurch gekennzeichnet, daß** der bewegliche Boden (115) Kühlmittel (116) aufweist.

29. Vorrichtung nach einem der Ansprüche 18 bis 28, **dadurch gekennzeichnet, daß** in der Gegenform (200) eine Öffnung (214) zum Einspritzen von Gas unter Druck vorgesehen ist, um die Kunststofffolie (10) an die Oberflächen des Formungshohlraums (121) anzupressen, sowie Austrittsöffnungen (113; 114) für die Luft, die sich im Betrieb zwischen der Kunststofffolie (10) und den Oberflächen des Formungshohlraums (100) befindet.

30. Einrichtung zur Herstellung einer Vielzahl von Behältern aus Kunststoff, **dadurch gekennzeichnet, daß** sie eine Vielzahl von Vorrichtungen nach einem der Ansprüche 18 bis 29 aufweist, die gleichzeitig auf einer einzigen, in den Vorrichtungen positionierten Kunststofffolie (10) arbeiten.

## Claims

1. Thermoforming method comprising the following steps:
- holding the heated plastic film (10) along the perimeter of a moulding cavity (121);
- gripping the film between a plug (215) and the mobile base of a mould (115);
- joint movement of the plug (215) and the base of the mould (115) towards the inside of the moulding cavity (121);
- blowing of the blank thus formed (10a, 10b) against cooled inner walls of the moulding cavity (121),
**characterized in that** the plug (215) and the base of the mould (115) grip the film along at least one local gripping zone (10c) the geometry of which is chosen to define, in addition to the gripping zone, two stretching zones (10a, 10b) which are stretched substantially independently of each other.

2. Method according to claim 1, **characterized in that** the gripping zone (10c) is of a generally annular shape, the stretching zones (10a, 10b) being located respectively inside and outside the gripping zone.

3. Method according to claim 1 or 2, **characterized in that** the gripping zone (10c) is formed of several separate segments.

4. Method according to one of claims 1 to 3, **characterized in that** in a first (10a) of the stretching zones, at least part of the stretching is produced by a piston (117, 217) which displaces part (10e) of the first zone (10a) with respect to said local gripping zone (10c).

5. Method according to claim 4, **characterized in that** the piston (117) releases the first zone (10a) during a blowing stage which follows the stretching in the two zones (10a, 10b) by the plug (215), the base of the mould (115) and the piston (117).

6. Method according to claim 4 or 5, **characterized in that** the first zone (10a) is a central zone, intended to constitute the base of a container to be moulded, the other zone (10b) being a peripheral zone intended to constitute a lateral wall of the container.

7. Method according to one of claims 4 to 6, **characterized in that** the plug (215) and the mould base (115) carry out jointly with the piston (117, 217) more or less all of the stretching provided for the first zone (10a).

8. Method according to claim 7, **characterized in that**, by means of the piston, said part (10e) of the first zone (10a) is displaced towards the inside of the moulding cavity (121), and **in that** during the blowing after said joint movement of the plug (215) and the base of the mould (115), said part (10e) of the first zone (10a) is gripped between the piston (217) and a surface (131) of the moulding cavity.

9. Method according to one of claims 4 to 8, **characterized in that** the piston (117, 217) is substantially central.

10. Method according to one of claims 4 to 9, **characterized in that** the film (10) is gripped between the plug (215) and the base of the mould (115) before moving said part (10e) of the first stretching zone (10a) by means of the piston (217) with respect to the local gripping zone (10c)

11. Method according to one of claims 4 to 10, **characterized in that** at the end of the joint movement of the plug (215) and of the base of the mould (115), the gripping zone (10c) is located radially away from the inner perimeter of the moulding cavity (121).

12. Method according to one of claims 4 to 11, **characterized in that** after the end of the joint movement of the plug (215) and the base of the mould (115), the film (10) is blown against the surface of the moulding cavity (121) so that the first zone (10a) spreads in the base of the moulding cavity by resorption of the movement which said part (10e) of the first zone (10a) had undergone under the action of the piston (117, 217).

13. Method according to one of claims 1 to 12, **characterized in that** different stretchings are defined for the two stretching zones (10a, 10b).

14. Method according to one of claims 1 to 13, **characterized in that** during the blowing stage, a gas pressure of between approximately 100 and 500 kPa is injected onto the plastic film (10).

15. Method according to any one of claims 1 to 14, **characterized in that** the blowing stage starts before the end of the joint movement stage, and the blown gas moves the mobile mould base (115) into its final position at the same time as it forms the container.

16. Method according to any one of claims 1 to 15, **characterized in that**, before the holding stage, a continuous, closed strip (12) is introduced into the moulding cavity (121) in order to allow the perimeter of the item obtained to be reinforced and decorated by adhesion to the plastic film formed.

17. Method according to any one of claims 1 to 15, **characterized in that** before the holding stage, a label is introduced into the mould and held in place by the vacuum in order to allow the final item obtained to be decorated by adhesion to the plastic film formed.

18. Thermoforming device, in particular for the implementation of a method according to any one of claims 1 to 17, comprising:
- a forming mould (100) and a counter-mould (200) which are mobile with respect to each other in order to selectively hold between them a heated plastic film (10) in an initial plane of the film around a moulding cavity (121) formed in the mould;
- a plug (215) which is mobile in the counter-mould (200) transversally to said initial plane in order to penetrate the moulding cavity (121) in a variable manner;
- a mould base (115) which is mobile in the mould moulding cavity (121) transversally to said initial plane, the plug (215) and the mould base (115) being capable of together defining a film-gripping zone (10c) and jointly displacing this gripping zone towards the inside of the moulding cavity (121);
**characterized in that** the gripping zone (10c) is configured to define on the film, in addition to the gripping zone (10c), two stretching zones (10a, 10b) which are stretchable independently of each other.

19. Device according to claim 18, **characterized in that** the gripping zone (10c) has a generally annular shape, a first stretching zone (10a) being located inside and the other (10b) being outside the gripping zone (10c).

20. Device according to claim 18 or 19, **characterized in that** the gripping zone (10c) is formed by separate segments.

21. Device according to one of claims 18 to 20, **characterized in that** it further comprises a piston (217) which is mobile with respect to the plug (215) in order to displace a part (10e) of a first (10a) of the stretching zones with respect to the gripping zone (10c).

22. Device according to claim 21, **characterized in that** it comprises, in the mobile base (115), a recess into which the piston (217) can project.

23. Device according to one of claims 18 to 20, **characterized in that** it further comprises a piston (117) which is mobile with respect to the mobile base (115) in order to displace a part (10e) of a first (10a) of the stretching zones with respect to the gripping zone (10c).

24. Device according to claim 23, **characterized in that** it comprises, in the plug (215), a recess (224) into which the piston (117) can project.

25. Device according to one of claims 21 to 24, **characterized in that** the piston (117, 217) is substantially axial in the moulding cavity (121).

26. Device according to one of claims 18 to 25, **characterized in that** the mould (100) comprises means (112, 116) for cooling at least part of the surfaces of the moulding cavity (121).

27. Device according to claim 26, **characterized in that** the counter-mould (200) contains means (212) of cooling a wall surrounding the plug (215).

28. Device according to one of claims 18 to 27, **characterized in that** the mobile base (115) contains cooling means (116).

29. Device according to one of claims 18 to 28, **characterized in that** a compressed-gas-injection orifice (214) is provided in the counter-mould (200) in order to flatten the plastic film (10) on the surfaces of the moulding cavity (121), and escape orifices (113; 114) are provided for the air accommodated in service between the plastic film (10) and the surfaces of the moulding cavity (100).

30. Apparatus for manufacturing a plurality of containers made of plastic, **characterized in that** it comprises a plurality of devices according to one of claims 18 to 29, which operate simultaneously on a single plastic film (10) positioned in said devices.
